(19) **Europäisches Patentamt / European Patent Office / Office européen des brevets**

(11) **EP 4 693 509 A1**

(12) # EUROPEAN PATENT APPLICATION
published in accordance with Art. 153(4) EPC

(43) Date of publication:
**11.02.2026 Bulletin 2026/07**

(21) Application number: **24779880.4**

(22) Date of filing: **21.03.2024**

(51) International Patent Classification (IPC):
$H01M\ 4/62^{(2006.01)}$  $H01M\ 4/134^{(2010.01)}$
$H01M\ 4/139^{(2010.01)}$  $H01M\ 4/38^{(2006.01)}$
$H01M\ 10/052^{(2010.01)}$  $H01M\ 10/0566^{(2010.01)}$

(52) Cooperative Patent Classification (CPC):
**H01M 4/134; H01M 4/139; H01M 4/38; H01M 4/62; H01M 10/052; H01M 10/0566;** Y02E 60/10

(86) International application number:
**PCT/JP2024/011128**

(87) International publication number:
**WO 2024/203761 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023053726**

(71) Applicant: **Zeon Corporation**
**Tokyo 100-8246 (JP)**

(72) Inventors:
• **MIWATA, Tomohiro**
**Tokyo 100-8246 (JP)**
• **YAMAMOTO, Norikazu**
**Tokyo 100-8246 (JP)**

(74) Representative: **Maiwald GmbH**
**Elisenhof**
**Elisenstraße 3**
**80335 München (DE)**

(54) **BINDER COMPOSITION FOR NON-AQUEOUS SECONDARY BATTERY NEGATIVE ELECTRODE, SLURRY COMPOSITION FOR NON-AQUEOUS SECONDARY BATTERY NEGATIVE ELECTRODE, NEGATIVE ELECTRODE FOR NON-AQUEOUS SECONDARY BATTERY, AND NON-AQUEOUS SECONDARY BATTERY**

(57)     Provided is a binder composition for a non-aqueous secondary battery negative electrode that can favorably suppress swelling of a negative electrode in accompaniment to repeated charging and discharging and that can cause a secondary battery to display excellent cycle characteristics. The binder composition for a non-aqueous secondary battery negative electrode contains a particulate binder and water. The particulate binder includes specific monomer units and has average particle diameters Da to Dc, measured by specific methods, that satisfy relationships in the following formulae (1) and (2): (1) Da - Db ≤ 60.0 nm; (2) 1.40 ≤ Da/Dc ≤ 2.00.

*FIG. 1*

EP 4 693 509 A1

**Description**

TECHNICAL FIELD

The present disclosure relates to a binder composition for a non-aqueous secondary battery negative electrode, a slurry composition for a non-aqueous secondary battery negative electrode, a negative electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In order to further improve the performance of secondary batteries, attempts have been made in recent years to improve binder compositions used in electrode mixed material layer formation.

For example, Patent Literature (PTL) 1 discloses, as a binder composition for an electrical storage device electrode that is capable of producing an electrical storage device (secondary battery) electrode having excellent close adherence and displaying good charge/discharge durability characteristics, a binder composition for an electrical storage device electrode that contains: a polymer (A) including not less than 20 parts by mass and not more than 70 parts by mass of repeating units derived from an unsaturated carboxylic acid and not less than 0 parts by mass and not more than 30 parts by mass of repeating units derived from an unsaturated carboxylic acid ester when the total of all included repeating units is taken to be 100 parts by mass, and having a swelling rate in electrolyte solution of 130% or less; and a liquid solvent (B). In examples in PTL 1, the polymer A is obtained through two-stage polymerization in which a specific monomer mixture is polymerized in a first stage and in which an unsaturated carboxylic acid such as methacrylic acid is further polymerized in a second stage. The polymer A that is obtained by two-stage polymerization in this manner can have what is referred to as a "core-shell structure".

CITATION LIST

Patent Literature

PTL 1: JP2016-58184A

SUMMARY

(Technical Problem)

However, when the binder composition of PTL 1 has been used to produce a negative electrode of a secondary battery, there has been room for improvement in terms of sufficiently suppressing swelling of the negative electrode in accompaniment to repeated charging and discharging and in terms of causing the secondary battery to display excellent cycle characteristics.

Accordingly, one object of the present disclosure is to provide a binder composition for a non-aqueous secondary battery negative electrode that can favorably suppress swelling of a negative electrode in accompaniment to repeated charging and discharging and that can cause a secondary battery to display excellent cycle characteristics.

Another object of the present disclosure is to provide a slurry composition for a non-aqueous secondary battery negative electrode that can favorably suppress swelling of a negative electrode in accompaniment to repeated charging and discharging and that can cause a secondary battery to display excellent cycle characteristics.

Another object of the present disclosure is to provide a negative electrode for a non-aqueous secondary battery that has a low tendency to swell even upon repeated charging and discharging and that can cause a secondary battery to display excellent cycle characteristics.

Another object of the present disclosure is to provide a non-aqueous secondary battery that has a low tendency to experience swelling of a negative electrode due to charging and discharging and that has excellent cycle characteristics.

(Solution to Problem)

The inventors conducted diligent investigation with the aim of solving the problems described above. The inventors made a new discovery that in the case of a binder composition for a non-aqueous secondary battery negative electrode containing a particulate binder and water, the problems described above can be solved by using a particulate binder that includes a polymer including specific monomer units in specific proportions and that has particle diameters measured by specific different methods that satisfying specific relationships. In this manner, the inventors completed the present disclosure.

Specifically, with the aim of advantageously solving the problems set forth above, [1] a presently disclosed binder composition for a non-aqueous secondary battery negative electrode comprises a particulate binder and water, wherein the particulate binder includes a polymer including an ethylenically unsaturated carboxylic acid monomer unit, an aromatic vinyl monomer unit, and an aliphatic conjugated diene monomer unit, proportional content of the ethylenically unsaturated carboxylic acid monomer unit when all repeating units in the polymer are taken to be 100 mass% is not less than 5.0 mass% and not more than 15.0 mass%, and the particulate binder has an average particle diameter Da measured by dynamic light scattering with respect to the binder composition for a non-aqueous secondary battery negative electrode when adjusted to a solid content concentration of 0.5 mass%, an average particle diameter Db measured by dynamic light scattering with respect to the binder composition for a non-aqueous secondary battery negative electrode when adjusted to a solid content concentration of 0.005 mass%, and an average particle diameter Dc measured by laser diffraction/scattering with respect to the binder composition for a non-aqueous secondary battery negative electrode that satisfy relationships in formulae (1) and (2), shown below:

$$Da - Db \leq 60.0 \text{ nm} \cdots (1)$$

$$1.40 \leq Da/Dc \leq 2.00 \cdots (2).$$

With a binder composition for a non-aqueous secondary battery negative electrode such as set forth above, it is possible to favorably suppress swelling of a negative electrode in accompaniment to repeated charging and discharging and to cause a secondary battery to display excellent cycle characteristics.

The average particle diameter Da, average particle diameter Db, and average particle diameter Dc referred to in the present specification can be measured according to methods described in the EXAMPLES section.

When a polymer is said to "include a monomer unit" in the present specification, this means that "a polymer obtained using that monomer includes a structural unit derived from the monomer". Moreover, the proportional content of a monomer unit in a polymer can be measured by a nuclear magnetic resonance (NMR) method such as $^1$H-NMR.

[2] In the binder composition for a non-aqueous secondary battery negative electrode according to the foregoing [1], an amount of tetrahydrofuran-insoluble content in the particulate binder is preferably more than 90 mass% and less than 100 mass%.

When the amount of tetrahydrofuran-insoluble content in the particulate binder is within the range set forth above, battery characteristics of an obtained secondary battery can be improved.

The "amount of tetrahydrofuran-insoluble content" in a particulate binder referred to in the present specification can be measured according to a method described in the EXAMPLES section.

[3] In the binder composition for a non-aqueous secondary battery negative electrode according to the foregoing [1] or [2], proportional content of the aliphatic conjugated diene monomer unit when all repeating units in the polymer are taken to be 100 mass% is preferably not less than 30.0 mass% and not more than 60.0 mass%.

When the proportional content of the aliphatic conjugated diene monomer unit is not less than the lower limit set forth above, swelling of an obtained negative electrode can be effectively suppressed.

On the other hand, when the proportional content of the aliphatic conjugated diene monomer unit is not more than the upper limit set forth above, cycle characteristics of an obtained secondary battery can be improved.

[4] In the binder composition for a non-aqueous secondary battery negative electrode according to any one of the foregoing [1] to [3], the polymer preferably further includes an ethylenically unsaturated amide monomer unit.

When the polymer further includes an ethylenically unsaturated amide monomer unit, cycle characteristics of an obtained secondary battery can be improved.

[5] In the binder composition for a non-aqueous secondary battery negative electrode according to the foregoing [4], proportional content of the ethylenically unsaturated amide monomer unit when all repeating units in the polymer are taken to be 100 mass% is preferably 3.5 mass% or more.

When the proportional content of the ethylenically unsaturated amide monomer unit is not less than the lower limit set forth above, cycle characteristics of an obtained secondary battery can be further improved.

Moreover, with the aim of advantageously solving the problems set forth above, [6] a presently disclosed slurry composition for a non-aqueous secondary battery negative electrode comprises: a negative electrode active material; and the binder composition for a non-aqueous secondary battery negative electrode according to any one of the foregoing [1] to [5].

With a slurry composition for a non-aqueous secondary battery negative electrode such as set forth above, it is possible to favorably suppress swelling of a negative electrode in accompaniment to repeated charging and discharging and to cause a secondary battery to display excellent cycle characteristics.

[7] In the slurry composition for a non-aqueous secondary battery negative electrode according to the foregoing [6], the negative electrode active material preferably includes a silicon-based negative electrode active material.

When the negative electrode active material includes a silicon-based negative electrode active material, the capacity of an obtained secondary battery can be improved. Moreover, since a silicon-based negative electrode active material displays particularly large expansion and contraction during charging and discharging, the use of a slurry composition for a non-aqueous secondary battery negative electrode that contains the presently disclosed binder composition for a non-aqueous secondary battery negative electrode makes it possible to effectively inhibit cutting of electrical conduction paths in a negative electrode mixed material layer caused by large expansion and contraction during charging and discharging, and, as a result, can effectively suppress deterioration of cycle characteristics of a secondary battery.

Furthermore, with the aim of advantageously solving the problems set forth above, [8] a presently disclosed negative electrode for a non-aqueous secondary battery comprises: a current collector; and a negative electrode mixed material layer located on the current collector, wherein the negative electrode mixed material layer is a layer formed from the slurry composition for a non-aqueous secondary battery negative electrode according to the foregoing [6] or [7].

A negative electrode for a non-aqueous secondary battery such as set forth above has a low tendency to swell even upon repeated charging and discharging and can cause a secondary battery to display excellent cycle characteristics.

Also, with the aim of advantageously solving the problems set forth above, [9] a presently disclosed non-aqueous secondary battery comprises a positive electrode, a negative electrode, a separator, and an electrolyte solution, wherein the negative electrode is the negative electrode for a non-aqueous secondary battery according to the foregoing [8].

A non-aqueous secondary battery such as set forth above has a low tendency to experience swelling of a negative electrode due to charging and discharging and has excellent cycle characteristics.

(Advantageous Effect)

According to the present disclosure, it is possible to provide a binder composition for a non-aqueous secondary battery negative electrode that can favorably suppress swelling of a negative electrode in accompaniment to repeated charging and discharging and that can cause a secondary battery to display excellent cycle characteristics.

Moreover, according to the present disclosure, it is possible to provide a slurry composition for a non-aqueous secondary battery negative electrode that can favorably suppress swelling of a negative electrode in accompaniment to repeated charging and discharging and that can cause a secondary battery to display excellent cycle characteristics.

Furthermore, according to the present disclosure, it is possible to provide a negative electrode for a non-aqueous secondary battery that has a low tendency to swell even upon repeated charging and discharging and that can cause a secondary battery to display excellent cycle characteristics.

Also, according to the present disclosure, it is possible to provide a non-aqueous secondary battery that has a low tendency to experience swelling of a negative electrode due to charging and discharging and that has excellent cycle characteristics.

BRIEF DESCRIPTION OF THE DRAWINGS

In the accompanying drawings:

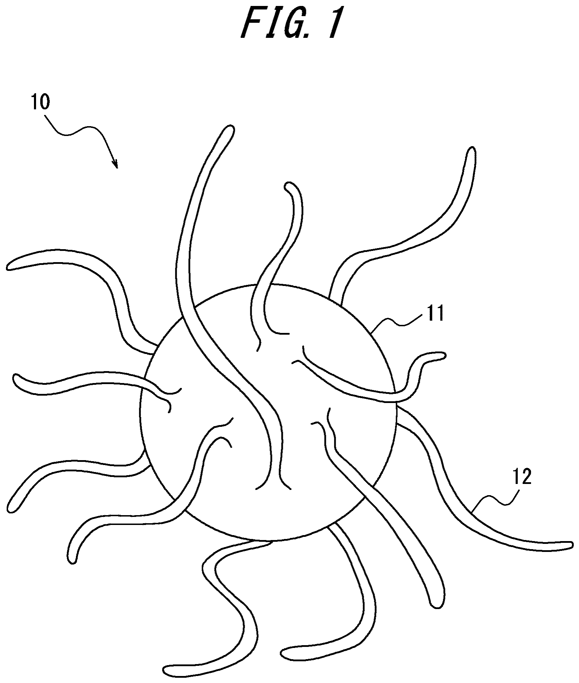

FIG. 1 is a schematic view illustrating a structure that a particulate binder used in a presently disclosed binder composition can adopt.

DETAILED DESCRIPTION

The following provides a detailed description of embodiments of the present disclosure.

The presently disclosed binder composition for a non-aqueous secondary battery negative electrode (hereinafter, also referred to simply as a "binder composition") can be used to produce a slurry composition for a non-aqueous secondary battery negative electrode (hereinafter, also referred to simply as a "slurry composition"). Moreover, the presently disclosed slurry composition for a non-aqueous secondary battery negative electrode can be used in production of a negative electrode for a lithium ion secondary battery or other such non-aqueous secondary battery (hereinafter, also referred to simply as a "negative electrode"). Furthermore, the presently disclosed negative electrode for a non-aqueous secondary battery can be used in a non-aqueous secondary battery.

(Binder composition for non-aqueous secondary battery negative electrode)

The presently disclosed binder composition for a non-aqueous secondary battery negative electrode contains a particulate binder and water and can optionally further contain other components besides the particulate binder and water.

<Particulate binder>

The particulate binder holds components such as a negative electrode active material in a negative electrode mixed material layer that has been formed using a slurry composition containing the binder composition and can thereby prevent shedding of these components from the negative electrode mixed material layer.

The particulate binder that is contained in the presently disclosed binder composition includes a polymer including an ethylenically unsaturated carboxylic acid monomer unit, an aromatic vinyl monomer unit, and an aliphatic conjugated diene monomer unit, wherein the proportional content of the ethylenically unsaturated carboxylic acid monomer unit when all repeating units in the polymer are taken to be 100 mass% is not less than 5.0 mass% and not more than 15.0 mass%. Moreover, the particulate binder has an average particle diameter Da measured by dynamic light scattering with respect to the binder composition when adjusted to a solid content concentration of 0.5 mass% (hereinafter, also referred to simply as the "average particle diameter Da"), an average particle diameter Db measured by dynamic light scattering with respect to the binder composition when adjusted to a solid content concentration of 0.005 mass% (hereinafter, also referred to simply as the "average particle diameter Db"), and an average particle diameter Dc measured by laser diffraction/scattering with respect to the binder composition (hereinafter, also referred to simply as the "average particle diameter Dc") that satisfy relationships in formulae (1) and (2), shown below.

$$Da - Db \leq 60.0 \text{ nm} \cdots (1)$$

$$1.40 \leq Da/Dc \leq 2.00 \cdots (2)$$

By using the particulate binder described above in the binder composition, it is possible to favorably suppress swelling of a negative electrode in accompaniment to repeated charging and discharging and to cause a secondary battery to display excellent cycle characteristics. The reason for these effects is presumed to be as follows.

It is presumed that a particulate binder for which the various average particle diameters described above satisfy specific relationships can have a structure that is capable of forming a good network. The following provides a specific description using FIG. 1 as an example, but is not intended to be a specific limitation. A particulate binder 10 for which the various average particle diameters described above satisfy specific relationships can include a main body portion 11 and a string-like portion 12 covering the main body portion 11. When the average particle diameter Da and the average particle diameter Db satisfy the relationship in formula (1), this can signify that the string-like portion 12 of the particulate binder 10 is strongly bound to the main body portion 11, and when the average particle diameter Da and the average particle diameter Dc satisfy the relationship in formula (2), this can signify that the string-like portion 12 of the particulate binder 10 is spread out well. Consequently, the particulate binder 10 such as described above can form a good network in a negative electrode mixed material layer through the respective string-like portions 12 of particles of the particulate binder 10. Moreover, when a polymer that is included in the particulate binder 10 has a specific chemical composition, and particularly when the polymer includes an ethylenically unsaturated carboxylic acid monomer unit in a specific proportion, it is presumed that swelling of a negative electrode in accompaniment to repeated charging and discharging can be favorably suppressed and a secondary battery can be caused to display excellent cycle characteristics as a result of strengthening of the network in a negative electrode mixed material layer.

Note that when a negative electrode active material that includes a silicon-based negative electrode active material is used, although the capacity of an obtained secondary battery increases, cycle characteristics normally deteriorate due to particularly large expansion and contraction of the silicon-based negative electrode active material during charging and discharging. However, by using the presently disclosed binder composition, it is possible to strengthen the network in the negative electrode mixed material layer and effectively inhibit cutting of electrical conduction paths in the negative electrode mixed material layer caused by large expansion and contraction during charging and discharging as previously described, and, as a result, it is possible to effectively suppress deterioration of cycle characteristics of an obtained secondary battery. Therefore, the presently disclosed binder composition can particularly suitably be used for producing a slurry composition in which a silicon-based negative electrode active material is used.

<<Properties of particulate binder>>

The difference (Da - Db) between the average particle diameter Da and the average particle diameter Db of the particulate binder is required to be 60.0 nm or less, and is preferably 50.0 nm or less, and more preferably 40.0 nm or less.

When the difference (Da - Db) between the average particle diameter Da and the average particle diameter Db is not more than any of the upper limits set forth above, a network in a negative electrode mixed material layer is further strengthened, and swelling of a negative electrode can be effectively suppressed. Moreover, cycling of an obtained secondary battery can be improved.

On the other hand, the difference (Da - Db) between the average particle diameter Da and the average particle diameter Db is 5.0 nm or more, for example, and may be 10.0 nm or more, or may be 20.0 nm or more.

The ratio (Da/Dc) of the average particle diameter Da relative to the average particle diameter Dc of the particulate binder is required to be 1.40 or more, and is preferably 1.50 or more, more preferably 1.55 or more, even more preferably 1.60 or more, and further preferably 1.70 or more. Moreover, the ratio (Da/Dc) of the average particle diameter Da relative to the average particle diameter Dc is required to be 2.00 or less, and is preferably 1.90 or less, and more preferably 1.80 or less.

When the ratio (Da/Dc) of the average particle diameter Da relative to the average particle diameter Dc is within any of the ranges set forth above, a network in a negative electrode mixed material layer is further strengthened, and swelling of a negative electrode can be effectively suppressed. Moreover, cycling of an obtained secondary battery can be improved.

Although no specific limitations are placed on the average particle diameter Da so long as the values of "Da - Db" and "Da/Dc" are within the specific ranges set forth above, the average particle diameter Da is preferably 180 nm or more, more preferably 200 nm or more, even more preferably 220 nm or more, and further preferably 240 nm or more, and is preferably 340 nm or less, more preferably 300 nm or less, and even more preferably 260 nm or less.

When the average particle diameter Da is not less than any of the lower limits set forth above, the strength of an obtained negative electrode can be further improved.

On the other hand, when the average particle diameter Da is not more than any of the upper limits set forth above, viscousness of the binder composition can be maintained well because an excessive increase of viscosity of the binder composition can be effectively suppressed.

The average particle diameter Db is preferably 130 nm or more, more preferably 150 nm or more, and even more preferably 180 nm or more, and is preferably 300 nm or less, more preferably 280 nm or less, and even more preferably 250 nm or less.

When the average particle diameter Db is not less than any of the lower limits set forth above, a network in a negative electrode mixed material layer is further strengthened.

On the other hand, when the average particle diameter Db is not more than any of the upper limits set forth above, viscousness of the binder composition can be maintained well because an excessive increase of viscosity of the binder composition can be effectively suppressed.

In a case in which the particulate binder has a structure such as illustrated in FIG. 1, for example, the average particle diameter Da and the average particle diameter Db are presumed to be dependent on the particle diameter of the overall particulate binder, and, in particular, are presumed to be significantly influenced by the string-like portion 12 that covers the main body portion 11 of the particulate binder 10. Accordingly, values of the average particle diameter Da and the average particle diameter Db can be adjusted, for example, through the types and amounts of monomers used in formation of the particulate binder (particularly the types and amounts of monomers that can form the string-like portion 12), the amount of a molecular weight modifier, the polymerization conditions, and so forth.

Although no specific limitations are placed on the average particle diameter Dc so long as the value of "Da/Dc" is within the specific range set forth above, the average particle diameter Dc is preferably 30 nm or more, more preferably 50 nm or more, even more preferably 100 nm or more, and further preferably 130 nm or more, and is preferably 250 nm or less, more preferably 200 nm or less, and even more preferably 150 nm or less.

When the average particle diameter Dc is not less than any of the lower limits set forth above, the strength of an obtained negative electrode can be further improved.

On the other hand, when the average particle diameter Dc is not more than any of the upper limits set forth above, dispersibility of the particulate binder in the binder composition can be improved.

Note that the value of the average particle diameter Dc can be adjusted, for example, through the types and amounts of monomers used in formation of the particulate binder, the polymerization conditions, and so forth.

The amount of tetrahydrofuran (THF) insoluble content in the particulate binder is preferably more than 90 mass%, more preferably 95 mass% or more, and even more preferably 97 mass% or more, and is preferably less than 100 mass%, and more preferably 99 mass% or less.

When the amount of tetrahydrofuran-insoluble content in the particulate binder is within any of the ranges set forth above, battery characteristics of an obtained secondary battery can be improved.

The degree of swelling in electrolyte solution of the particulate binder is preferably 110 mass% or more, and more preferably 120 mass% or more, and is preferably 150 mass% or less, and more preferably 140 mass% or less.

When the degree of swelling in electrolyte solution of the particulate binder is within any of the ranges set forth above, battery characteristics of an obtained secondary battery can be improved.

The "degree of swelling in electrolyte solution" of the particulate binder referred to in the present specification can be measured according to a method described in the EXAMPLES section.

The tensile strength of the particulate binder in a repeated tensing test measured according to a method described in the EXAMPLES section is preferably 1.5 MPa or more, more preferably 2.0 MPa or more, even more preferably 3.0 MPa or more, and further preferably 3.8 MPa or more.

Note that the tensile strength in a repeated tensing test is 20.0 MPa or less, for example, and may be 15.0 MPa or less, or may be 10.0 MPa or less.

<<Chemical composition of polymer included in particulate binder>>

The polymer included in the particulate binder (hereinafter, also referred to simply as "the polymer") includes an ethylenically unsaturated carboxylic acid monomer unit, an aromatic vinyl monomer unit, and an aliphatic conjugated diene monomer unit and can optionally further include an ethylenically unsaturated amide monomer unit and other monomer units.

{Ethylenically unsaturated carboxylic acid monomer unit}

Ethylenically unsaturated carboxylic acid monomers that can form an ethylenically unsaturated carboxylic acid monomer unit do not normally have a hydroxyl group (-OH) other than a hydroxyl group in a carboxyl group.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. One ethylenically unsaturated carboxylic acid monomer may be used individually, or two or more ethylenically unsaturated carboxylic acid monomers may be used in combination in a freely selected ratio.

Examples of ethylenically unsaturated monocarboxylic acids include acrylic acid, methacrylic acid, and crotonic acid.

Examples of derivatives of ethylenically unsaturated monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of ethylenically unsaturated dicarboxylic acids include maleic acid, fumaric acid, and itaconic acid.

Examples of acid anhydrides of ethylenically unsaturated dicarboxylic acids include maleic anhydride, diacrylic anhydride, methylmaleic anhydride, and dimethylmaleic anhydride.

Examples of derivatives of ethylenically unsaturated dicarboxylic acids include methylmaleic acid, phenylmaleic acid, chloromaleic acid, dichloromaleic acid, and fluoromaleic acid.

A monofunctional ethylenically unsaturated carboxylic acid monomer that includes one ethylenically unsaturated bond (C=C) in a molecule is preferable as an ethylenically unsaturated carboxylic acid monomer. Moreover, from a viewpoint of polymerizability, ethylenically unsaturated monocarboxylic acids and ethylenically unsaturated dicarboxylic acids are preferable, acrylic acid, methacrylic acid, and itaconic acid are more preferable, and acrylic acid and methacrylic acid are even more preferable as ethylenically unsaturated carboxylic acid monomers. In other words, the polymer preferably includes at least one monomer unit from among an ethylenically unsaturated monocarboxylic acid unit and an ethylenically unsaturated dicarboxylic acid unit, more preferably includes at least one monomer unit selected from the group consisting of an acrylic acid unit, a methacrylic acid unit, and an itaconic acid unit, and even more preferably includes either or both of an acrylic acid unit and a methacrylic acid unit. Moreover, it is particularly preferable that the polymer includes both an acrylic acid unit and a methacrylic acid unit.

The proportional content of ethylenically unsaturated carboxylic acid monomer units in the polymer when all repeating units (all monomer units) in the polymer are taken to be 100 mass% is required to be 5.0 mass% or more, and is preferably 10.0 mass% or more, and more preferably 13.0 mass% or more. Moreover, the proportional content of ethylenically unsaturated carboxylic acid monomer units in the polymer when all repeating units (all monomer units) in the polymer are taken to be 100 mass% is required to be 15.0 mass% or less, and is preferably 14.5 mass% or less.

When the proportional content of ethylenically unsaturated carboxylic acid monomer units in the polymer is not less than any of the lower limits set forth above, swelling of an obtained negative electrode can be effectively suppressed. Moreover, cycle characteristics of an obtained secondary battery can be improved.

On the other hand, when the proportional content of ethylenically unsaturated carboxylic acid monomer units in the polymer is not more than any of the upper limits set forth above, the strength maintenance rate of the particulate binder upon repeated tensing can be improved. As a result, disintegration of a negative electrode mixed material layer due to cracking of the particulate binder or the like can be effectively inhibited even upon repeated expansion and contraction of the negative electrode mixed material layer due to secondary battery charging and discharging.

{Aromatic vinyl monomer unit}

Examples of aromatic vinyl monomers that can form an aromatic vinyl monomer unit include aromatic monovinyl compounds such as styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene and derivatives thereof are preferable. Although one of these aromatic vinyl monomers can be used individually or two or more of these aromatic vinyl monomers can be used in combination, it is preferable that one aromatic vinyl monomer is used individually.
The proportional content of aromatic vinyl monomer units in the polymer when all repeating units in the polymer are taken to be 100 mass% is preferably 10.0 mass% or more, more preferably 20.0 mass% or more, and even more preferably 30.0 mass% or more, and is preferably 60.0 mass% or less, more preferably 40.0 mass% or less, and even more preferably 34.0 mass% or less.
When the proportional content of aromatic vinyl monomer units is not less than any of the lower limits set forth above, cycle characteristics of an obtained secondary battery can be improved.
On the other hand, when the proportional content of aromatic vinyl monomer units is not more than any of the upper limits set forth above, flexibility of an obtained negative electrode can be improved.

{Aliphatic conjugated diene monomer unit}

Examples of aliphatic conjugated diene monomers that can form an aliphatic conjugated diene monomer unit include aliphatic conjugated diene compounds having a carbon number of 4 or more such as 1,3-butadiene, isoprene, 2,3-dimethyl-1,3-butadiene, and 1,3-pentadiene. Of these aliphatic conjugated diene monomers, 1,3-butadiene and isoprene are preferable, and 1,3-butadiene is more preferable. Although one of these aliphatic conjugated diene monomers can be used individually or two or more of these aliphatic conjugated diene monomers can be used in combination, it is preferable that one aliphatic conjugated diene monomer is used individually. By using 1,3-butadiene to form an aliphatic conjugated diene monomer unit of the polymer, it is possible to increase dispersion stability and thermal stability of the obtained polymer.
The proportional content of aliphatic conjugated diene monomer units in the polymer when all repeating units in the polymer are taken to be 100 mass% is preferably 30.0 mass% or more, more preferably 40.0 mass% or more, and even more preferably 45.0 mass% or more, and is preferably 70.0 mass% or less, more preferably 60.0 mass% or less, even more preferably 50.0 mass% or less, and further preferably 48.0 mass% or less.
When the proportional content of aliphatic conjugated diene monomer units is not less than any of the lower limits set forth above, a negative electrode having even better flexibility can be obtained.
On the other hand, when the proportional content of aliphatic conjugated diene monomer units is not more than any of the upper limits set forth above, cycling of an obtained secondary battery can be improved.

{Ethylenically unsaturated amide monomer unit}

It is preferable for the polymer to further include an ethylenically unsaturated amide monomer unit because this can improve cycle characteristics of an obtained secondary battery.
Examples of ethylenically unsaturated amide monomers that can form an ethylenically unsaturated amide monomer unit include monomers (ethylenically unsaturated amide monomers) resulting from amidation of any of the ethylenically unsaturated carboxylic acid monomers described above. For example, acrylamide, methacrylamide, crotonamide, or the like may be used as a monomer (ethylenically unsaturated monoamide monomer) resulting from amidation of an ethylenically unsaturated monocarboxylic acid. Of these monomers, acrylamide and methacrylamide are preferable, and acrylamide is particularly preferable.
The proportional content of ethylenically unsaturated amide monomer units in the polymer when all repeating units in the polymer are taken to be 100 mass% is preferably 1.0 mass% or more, more preferably 3.0 mass% or more, even more preferably 3.5 mass% or more, and further preferably 4.0 mass% or more, and is preferably 15.0 mass% or less, more preferably 10.0 mass% or less, and even more preferably 5.0 mass% or less.
When the proportional content of ethylenically unsaturated amide monomer units is not less than any of the lower limits set forth above, cycle characteristics of an obtained secondary battery can be further improved.
On the other hand, when the proportional content of ethylenically unsaturated amide monomer units is not more than any of the upper limits set forth above, flexibility of an obtained negative electrode can be improved.

{Other monomer units}

Examples of monomers that can form other monomer units include, but are not specifically limited to, nitrile group-containing monomers such as acrylonitrile and methacrylonitrile; and ethylenically unsaturated carboxylic acid ester monomers resulting from esterification of any of the ethylenically unsaturated carboxylic acid monomers described above.

Note that the aforementioned ethylenically unsaturated carboxylic acid ester monomers are inclusive of ethylenically unsaturated carboxylic acid ester monomers that include a hydroxyalkyl group such as hydroxyethyl (meth)acrylate, hydroxypropyl (meth)acrylate, and hydroxybutyl (meth)acrylate.

Also note that in the present specification, "(meth)acrylate" is used to indicate "acrylate" and/or "methacrylate".

The proportional content of other monomer units in the polymer when all repeating units in the polymer are taken to be 100 mass% is preferably 10.0 mass% or less, more preferably 5.0 mass% or less, even more preferably 1.0 mass% or less, and particularly preferably 0 mass%. In other words, it is particularly preferable that the polymer does not include other monomer units.

{Production method of polymer included in particulate binder}

The polymer that is included in the particulate binder can be polymerized according to a known polymerization method such as solution polymerization, suspension polymerization, bulk polymerization, or emulsion polymerization, for example. Of these polymerization methods, emulsion polymerization is preferable because it is easy to adjust each average particle diameter of the particulate binder.

The polymerization reaction can be addition polymerization such as ionic polymerization, radical polymerization, or living radical polymerization.

It is preferable that a molecular weight modifier (chain transfer agent) is contained in the polymerization system during the polymerization reaction because this enables appropriate adjustment of properties of the particulate binder and so forth.

Examples of molecular weight modifiers that may be used include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene; thiuram compounds such as tetramethylthiuram disulfide, tetraethylthiuram disulfide, and tetramethylthiuram monosulfide; phenolic compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; thio compounds such as thioglycolic acid, thiomalic acid, and 2-ethylhexyl thioglycolate; diphenylethylene; and α-methylstyrene dimer. Of these molecular weight modifiers, t-dodecyl mercaptan is preferable.

One of the molecular weight modifiers described above may be used individually, or two or more of the molecular weight modifiers described above may be used in combination in a freely selected ratio.

The used amount of the molecular weight modifier is preferably 0.05 parts by mass or more, more preferably 0.10 parts by mass or more, and even more preferably 0.15 parts by mass or more relative to 100 parts by mass of the total used amount of monomers, and is preferably 2.00 parts by mass or less, more preferably 1.00 parts by mass or less, even more preferably 0.50 parts by mass or less, and further preferably 0.30 parts by mass or less relative to 100 parts by mass of the total used amount of monomers.

When the used amount of the molecular weight modifier is within any of the ranges set forth above, properties of the particulate binder and so forth can be appropriately adjusted.

Besides the molecular weight modifier, typically used additives such as emulsifiers, dispersants, polymerization initiators, and polymerization aids can also be used in the polymerization reaction. The used amounts of these additives can be set as typically used amounts.

The maximum temperature during the polymerization reaction is preferably higher than 80°C, and more preferably 85°C or higher, and is preferably lower than 100°C, and more preferably 95°C or lower.

When the maximum temperature is within any of the ranges set forth above, properties of the particulate binder and so forth can be appropriately adjusted.

The duration of a temperature exceeding 80°C in the polymerization reaction is preferably 1 hour or more, more preferably 2 hours or more, and even more preferably 3 hours or more, and is preferably 7 hours or less, more preferably 6 hours or less, and even more preferably 5 hours or less.

When the duration of this temperature is within any of the ranges set forth above, properties of the particulate binder and so forth can be appropriately adjusted.

<<Proportional content of particulate binder>>

The proportional content of the particulate binder in the binder composition (inclusive of a solvent described below) when the binder composition is used in production of a slurry composition is preferably 20 mass% or more, and more preferably 30 mass% or more, and is preferably 60 mass% or less, and more preferably 50 mass% or less.

<Solvent>

The presently disclosed binder composition is required to contain water as a solvent and may contain a small amount of an organic solvent in addition to the water to the extent that the object of the present disclosure is not lost.

<Other components>

The presently disclosed binder composition may contain other components to the extent that the object of the present disclosure is not lost. Examples of such other components include antioxidants, defoamers, and dispersants.
One other component may be used individually, or two or more other components may be used in combination in a freely selected ratio.

<Production method of binder composition for non-aqueous secondary battery negative electrode>

The presently disclosed binder composition can be produced by mixing the particulate binder, other components that can optionally be used, and so forth in the presence of water without any specific limitations. Note that in a situation in which a dispersion liquid of the particulate binder is used in production of the binder composition, liquid content of the dispersion liquid may be used in that form as a solvent of the binder composition.

(Slurry composition for non-aqueous secondary battery negative electrode)

The presently disclosed slurry composition for a non-aqueous secondary battery negative electrode is a composition that is used for forming a negative electrode mixed material layer of a negative electrode and that contains the binder composition for a non-aqueous secondary battery negative electrode set forth above and a negative electrode active material. In other words, the presently disclosed slurry composition contains at least a particulate binder, a negative electrode active material, and water. Moreover, the presently disclosed slurry composition can favorably suppress swelling of a negative electrode in accompaniment to repeated charging and discharging and can cause a secondary battery to display excellent cycle characteristics as a result of containing the presently disclosed binder composition.
Note that the presently disclosed slurry composition may further contain other components besides the particulate binder, the negative electrode active material, and water.

<Binder composition>

The presently disclosed binder composition that contains a specific particulate binder and water is used as the binder composition.
The content of the particulate binder in the slurry composition is preferably 0.5 parts by mass or more, and more preferably 1.0 parts by mass or more relative to 100 parts by mass of the negative electrode active material, and is preferably 5.0 parts by mass or less, and more preferably 3.0 parts by mass or less relative to 100 parts by mass of the negative electrode active material.

<Negative electrode active material>

Any known negative electrode active material that is used in secondary batteries can be used without any specific limitations as the negative electrode active material. For example, examples of negative electrode active materials that can be used in a negative electrode mixed material layer of a lithium ion secondary battery, which is one example of a secondary battery, include carbon-based negative electrode active materials, metal-based negative electrode active materials, and negative electrode active materials that are a combination thereof without any specific limitations.
The term "carbon-based negative electrode active material" refers to an active material that has carbon as a main framework allowing insertion (also referred to as "doping") of lithium. Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based negative electrode active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

One of the negative electrode active materials described above may be used individually, or two or more of the negative electrode active materials described above may be used in combination.

From a viewpoint of improving the capacity of a secondary battery, it is preferable that the negative electrode active material includes at least a metal-based negative electrode active material, and particularly preferable that the negative electrode active material includes a negative electrode active material that contains silicon (silicon-based negative electrode active material).

Since a silicon-based negative electrode active material displays particularly large expansion and contraction during charging and discharging, the use of a slurry composition that contains the presently disclosed binder composition makes it possible to effectively inhibit cutting of electrical conduction paths in a negative electrode mixed material layer caused by large expansion and contraction during charging and discharging, and, as a result, can effectively suppress deterioration of cycle characteristics of a secondary battery.

In a case in which the negative electrode active material includes a silicon-based negative electrode active material, the proportion constituted by the silicon-based negative electrode active material is preferably 1.0 parts by mass or more, more preferably 3.0 parts by mass or more, and even more preferably 5.0 parts by mass or more per 100 parts by mass of the negative electrode active material, and is preferably 20.0 parts by mass or less, more preferably 15.0 parts by mass or less, and even more preferably 10.0 parts by mass or less per 100 parts by mass of the negative electrode active material.

<Other components>

Examples of other components that can be compounded in the slurry composition include, but are not specifically limited to, thickeners, conductive materials, and the same components as other components that can be compounded in the presently disclosed binder composition. For example, carboxymethyl cellulose, a lithium salt of an acrylic acid/acrylamide/hydroxyethylacrylamide copolymer, or the like may be used as a thickener.

One other component may be used individually, or two or more other components may be used in combination in a freely selected ratio.

<Production of slurry composition for non-aqueous secondary battery negative electrode>

No specific limitations are placed on the method by which the slurry composition is produced.

For example, the slurry composition can be produced by mixing the binder composition, the negative electrode active material, and other components that are used as necessary in the presence of water.

Note that a solvent used in production of the slurry composition is inclusive of a solvent that was contained in the binder composition. The mixing method is not specifically limited and can be mixing using a typically used stirrer or disperser.

(Negative electrode for non-aqueous secondary battery)

The presently disclosed negative electrode for a non-aqueous secondary battery includes a current collector and a negative electrode mixed material layer located on the current collector, wherein the negative electrode mixed material layer is a layer formed using the slurry composition for a non-aqueous secondary battery negative electrode set forth above. As a result of the negative electrode mixed material layer in the presently disclosed negative electrode being formed using the presently disclosed slurry composition, the presently disclosed negative electrode has a low tendency to swell even upon repeated charging and discharging and can cause a secondary battery to display excellent cycle characteristics.

<Negative electrode mixed material layer>

The negative electrode mixed material layer is formed of a dried product of the presently disclosed slurry composition, normally contains a negative electrode active material and a component derived from a particulate binder, and can optionally further contain other components. Note that components contained in the negative electrode mixed material layer are components that were contained in the presently disclosed slurry composition and that the preferred ratio of these components is the same as the preferred ratio of the components in the slurry composition. Also note that although the particulate binder is present in a particulate form in the binder composition and the slurry composition, the particulate binder may have a particulate form or may have any other form in the negative electrode mixed material layer that is formed using the slurry composition.

<Current collector>

The current collector of the negative electrode is a material having electrical conductivity and electrochemical durability. Specifically, the current collector may, for example, be made of iron, copper, aluminum, nickel, stainless steel, titanium, tantalum, gold, platinum, or the like. Copper foil is particularly preferable as the current collector of the negative electrode. One of these materials may be used individually, or two or more of these materials may be used in combination in a freely selected ratio.

<Production method of negative electrode>

The negative electrode mixed material layer of the presently disclosed negative electrode can be formed using any of the following methods, for example.

(1) A method in which the presently disclosed slurry composition is applied onto the surface of the current collector and is then dried
(2) A method in which the current collector is immersed in the presently disclosed slurry composition and is then dried
(3) A method in which the presently disclosed slurry composition is applied onto a releasable substrate and is dried to produce a negative electrode mixed material layer that is then transferred onto the surface of the current collector

Of these methods, method (1) is particularly preferable since it allows simple control of the thickness of the negative electrode mixed material layer. In more detail, method (1) includes a step of applying the slurry composition onto the current collector (application step) and a step of drying the slurry composition that has been applied onto the current collector to form a negative electrode mixed material layer on the current collector (drying step).

<<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto just one side of the current collector or may be applied onto both sides of the current collector. The thickness of the slurry coating on the current collector after application but before drying can be set as appropriate in accordance with the thickness of the negative electrode mixed material layer to be obtained after drying.

<<Drying step>>

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition on the current collector in this manner, it is possible to form a negative electrode mixed material layer on the current collector and thereby obtain a negative electrode that includes the current collector and the negative electrode mixed material layer located on the current collector.

After the drying step, the negative electrode mixed material layer may be further subjected to a pressing process by mold pressing, roll pressing, or the like. This pressing process can improve close adherence between the negative electrode mixed material layer and the current collector and enables further densification of the obtained negative electrode mixed material layer. Furthermore, in a case in which the negative electrode mixed material layer contains a curable polymer, this polymer is preferably cured after formation of the negative electrode mixed material layer.

(Non-aqueous secondary battery)

The presently disclosed non-aqueous secondary battery includes a positive electrode, a negative electrode, an electrolyte solution, and a separator, wherein the negative electrode is the negative electrode for a non-aqueous secondary battery set forth above. As a result of the presently disclosed secondary battery including the presently disclosed negative electrode, the presently disclosed secondary battery has a low tendency to experience swelling of the negative electrode due to charging and discharging and has excellent cycle characteristics.

Although the following describes, as one example, a case in which the secondary battery is a lithium ion secondary battery, the presently disclosed secondary battery is not limited to the following example.

Since the negative electrode has already been described above, description thereof is omitted below.

<Positive electrode>

Any known positive electrode that is used in a secondary battery can be used without any specific limitations as the positive electrode that is included in the presently disclosed secondary battery. Specifically, a positive electrode obtained by forming a positive electrode mixed material layer on a current collector by a known production method can be used as the positive electrode.

Any known positive electrode active material that is used in a secondary battery can be used without any specific limitations as a positive electrode active material that is compounded in the positive electrode mixed material layer.

For example, a compound that includes a transition metal such as a transition metal oxide, a transition metal sulfide, or a complex metal oxide of lithium and a transition metal can be used as the positive electrode active material that is compounded in the positive electrode mixed material layer. Examples of the transition metal include Ti, V, Cr, Mn, Fe, Co, Ni, Cu, and Mo.

Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn such as $LiNi_{5/10}Co_{2/10}Mn_{3/10}O_2$ (NMC532), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

One of the positive electrode active materials described above may be used individually, or two or more of the positive electrode active materials described above may be used in combination.

The current collector of the positive electrode may be any of the materials that were previously described for the current collector of the negative electrode. Aluminum foil is particularly preferable as the current collector of the positive electrode.

The material used as the current collector of the positive electrode may be one type of material used individually or may be two or more types of materials used in combination in a freely selected ratio.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation.

One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives can be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferable in terms that the thickness of the overall separator can be reduced, thereby increasing the ratio of electrode active material inside the secondary battery and increasing the volumetric capacity.

<Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that the presently disclosed negative electrode is used in the presently disclosed secondary battery. The presently disclosed secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion constituted by a repeating unit (monomer unit) that is formed through polymerization of a given monomer in the polymer is normally, unless otherwise specified, the same as the ratio (charging ratio) of the given monomer among all monomers used in polymerization of the polymer.

In the examples and comparative examples, measurements and evaluations of the average particle diameter Da of a particulate binder measured by dynamic light scattering (solid content concentration 0.5 mass%), the average particle diameter Db of a particulate binder measured by dynamic light scattering (solid content concentration 0.005 mass%), the average particle diameter Dc of a particulate binder measured by laser diffraction/scattering, the amount of THF-insoluble content, the degree of swelling in electrolyte solution, a repeated tensing test, the tensile strength in a repeated tensing test, electrode swelling, and cycle characteristics were performed as follows.

<Average particle diameter Da of particulate binder measured by dynamic light scattering (solid content concentration 0.5 mass%)>

First, deionized water was added to a binder composition (water dispersion of a particulate binder) obtained in the examples and comparative examples so as to adjust the solid content concentration to 0.5 mass%.

Next, a particle size analyzer (model "FPAR-1000" produced by Otsuka Electronics Co., Ltd.) having dynamic light scattering as a measurement principle was used to measure a particle size distribution of the binder composition that had undergone solid content concentration adjustment, and the particle diameter (D50) at which cumulative frequency of light scattering intensity calculated from a small diameter end in the measured particle size distribution reached 50% was taken to be the average particle diameter Da. Note that the measurement conditions in the dynamic light scattering are as follows.

Dispersion medium: Water
Measurement temperature: 25°C
Measurement concentration (solid content concentration): 0.5 mass%
Scattering angle: 160°
Light source laser wavelength: 632.8 nm

<Average particle diameter Db of particulate binder measured by dynamic light scattering (solid content concentration 0.005 mass%)>

The average particle diameter Db was calculated in the same manner as the average particle diameter Da described above with the exception that deionized water was further added to the binder composition so as to change the measurement concentration (solid content concentration) from 0.5 mass% to 0.005 mass%.

<Average particle diameter of particulate binder measured by laser diffraction/scattering>

A particle size analyzer (produced by Shimadzu Corporation; product name: SALD-2300) having laser diffraction/scattering as a measurement principle was used to measure a particle size distribution of a binder composition (water dispersion of a particulate binder; solid content concentration adjusted to 0.1 mass%) obtained in the examples and comparative examples in accordance with JIS Z8825. The particle diameter (D50) at which cumulative volume calculated from a small diameter end in the measured particle size distribution reached 50% was taken to be the average particle diameter Dc.

<Amount of THF-insoluble content>

A binder composition obtained in the examples and comparative examples was used to measure the amount of THF-insoluble content in a particulate binder.
Specifically, the binder composition was first dripped into a petri dish such that there was 1.5 g of solid content. Next, 24 hours of drying was performed in a 22°C to 25°C environment, and then a further 1 hour of drying was performed at 110°C to obtain a film of the particulate binder. Next, this film was cut up into 2.5 mm squares, and approximately 0.3 g thereof were precisely weighed. The mass of the film pieces obtained through cutting was taken to be WO. Next, the film pieces were immersed in 80 mL of THF at 25°C for 24 hours. The film pieces were then pulled out of the THF, were vacuum dried at 105°C for 3 hours, and the mass W1 of the film pieces was measured. The amount (mass%) of THF-insoluble content was calculated according to the following formula (3).

$$\text{Amount of insoluble content (mass\%)} = (W1/W0) \times 100 \qquad (3)$$

<Degree of swelling in electrolyte solution>

A binder composition obtained in the examples and comparative examples was used to measure the degree of swelling in electrolyte solution of a particulate binder.
Specifically, the binder composition was first dried in an environment having a humidity of 50% and a temperature of 23°C to 25°C to form a film of $1 \pm 0.3$ mm in thickness. The resultant film was dried for in a vacuum dryer at a temperature of 60°C for 10 hours to obtain a film of the particulate binder. Next, this film was cut up and approximately 1 g thereof was precisely weighed. The mass of the obtained film piece was taken to be WO. This film piece was immersed in electrolyte solution (chemical composition: $LiPF_6$ solution of 1.0 M in concentration (solvent: mixed solvent of EC/EMC = 3/7 (mass ratio); additive: 2 mass% (solvent ratio) of vinylene carbonate)) in an environment having a temperature of 60°C for 3 days to cause swelling thereof. Thereafter, the film piece was pulled out of the electrolyte solution, and the mass thereof was measured after electrolyte solution on the surface of the film piece had been wiped off using a KimWipe. The mass of the swollen film piece was taken to be W1.
The degree of swelling in electrolyte solution was calculated using the following formula (4).
Degree of swelling in electrolyte solution (mass%) = W1/WO $\times$ 100 (4)

<Repeated tensing test>

A binder composition obtained in the examples and comparative examples was used to perform a repeated tensing test.
Specifically, the binder composition was first dripped into a petri dish of 10 cm in diameter such that the amount of solid content was 3.9 g. Next, the binder composition was dried in a 22°C to 25°C environment for 24 hours, and was then further dried in an environment of -0.09 kPa (gauge pressure) or lower and 100°C for 10 hours to obtain a film of a particulate binder. The obtained film was cut out as a dumbbell shape and was immersed in a solvent of ethylene carbonate (EC)/ethyl methyl carbonate (EMC) (= 3/7 (mass ratio)) at 60°C for 72 hours. A repeated tensing test was then performed in a separately prepared solvent of EC/EMC (= 3/7 (mass ratio)), and the occurrence or absence of breaking of the dumbbell-shaped film was checked. Note that the test conditions of the repeated tensing test are as follows.

Tensing rate: 100 mm/min
Tensile elongation: 30%
Number of repetitions: 500
Test temperature: 20°C
Test humidity: Dew point of -40°C or lower
Apparatus manufacturer: Toyo Seiki Seisaku-Sho, Ltd.

Model: Strograph E3-L

<Tensile strength in repeated tensing test>

The tensile strength of the dumbbell-shaped film in the repeated tensing test described above was measured.
Specifically, 500 repetitions of the tensing test were performed, and the tensile strength at a tensile elongation of 30% in the 500th repetition was taken to be the tensile strength in the repeated tensing test.
Note that in the case of a film that was produced using a binder composition obtained in Comparative Example 4, measurement of tensile strength in a repeated tensing test was not performed because breaking of the film occurred during the repeated tensing test.

<Electrode swelling>

The thickness (d0) of a negative electrode produced in a negative electrode production step was measured. This negative electrode was used to produce a secondary battery. The produced secondary battery was left at rest in an environment having a temperature of 25°C for 5 hours with electrodes in an immersed state in electrolyte solution. Next, the secondary battery that had been left at rest was charged to a cell voltage of 3.65 V by a constant-current method at a rate of 0.2C in an environment having a temperature of 25°C. Thereafter, the charged secondary battery was subjected to 12 hours of aging in an environment having a temperature of 60°C. Next, the secondary battery that had been subjected to aging was discharged to a cell voltage of 3.00 V by a constant-current method at a rate of 0.2C in an environment having a temperature of 25°C.
The secondary battery was then subjected to 100 cycles of a charge/discharge operation under conditions of a cell voltage of 4.20 V to 3.00 V and a charge/discharge rate of 1C in an environment having a temperature of 25°C. The secondary battery in a discharged state was then disassembled, the negative electrode was taken out, and a value determined by subtracting the thickness of the current collector from the thickness of the overall negative electrode was measured as the thickness (d1) of the negative electrode after cycling. The ratio of change of the thickness (d1) of the negative electrode after cycling relative to the thickness (d0) of the negative electrode at the time of secondary battery production was determined as the swelling of the negative electrode after cycling (= $\{(d1 - d0)/d0\} \times 100(\%)$) and was judged by the following standard. Less swelling of the negative electrode after cycling indicates better suppression of swelling of the negative electrode in accompaniment to repeated charging and discharging.

A: Swelling of negative electrode after cycling of less than 25%
B: Swelling of negative electrode after cycling of not less than 25% and less than 27%
C: Swelling of negative electrode after cycling of not less than 27% and less than 30%
D: Swelling of negative electrode after cycling of 30% or more

<Cycle characteristics>

A secondary battery produced in the examples and comparative examples was used to evaluate cycle characteristics.
Specifically, first a laminate cell-type secondary battery was subjected to electrolyte solution injection, aging, and conditioning. Next, the secondary battery was subjected to a charge/discharge operation of charging to a cell voltage of 4.20 V and discharging to a cell voltage of 2.75 V by a 0.5C constant-current method in a 25°C environment, and the initial capacity C0 was measured. This charging and discharging was further repeated, and the capacity C1 after 100 cycles was measured. A capacity maintenance rate C2 was then calculated according to the following formula.

$$C2\ (\%) = (C1/C0) \times 100$$

A larger value for the capacity maintenance rate C2 indicates better cycle characteristics.

A: Capacity maintenance rate C2 of 93% or more
B: Capacity maintenance rate C2 of not less than 88% and less than 93%
C: Capacity maintenance rate C2 of not less than 83% and less than 88%
D: Capacity maintenance rate C2 of less than 83%

(Example 1)

<Production of binder composition>

A 5 MPa pressure-resistant vessel A equipped with a stirrer was charged with 2.1 parts of styrene as an aromatic vinyl monomer, 3.3 parts of 1,3-butadiene as an aliphatic conjugated diene monomer, 0.1 parts of methacrylic acid as an ethylenically unsaturated carboxylic acid monomer, 0.23 parts of sodium dodecyl diphenyl ether disulfonate as an emulsifier, 15 parts of deionized water, and 0.02 parts of potassium persulfate as a polymerization initiator to obtain a mixture A. The obtained mixture A was thoroughly stirred, was subsequently heated to 57°C to initiate polymerization, and was reacted for 5 hours. Thereafter, the temperature was set to 70°C, and a reaction was performed for a further 4 hours to yield seed particles.

Separately thereto, a 5 MPa pressure-resistant vessel B equipped with a stirrer was charged with 31.6 parts of styrene as an aromatic vinyl monomer, 44 parts of 1,3-butadiene as an aliphatic conjugated diene monomer, 14.2 parts of acrylic acid as an ethylenically unsaturated carboxylic acid monomer, 4.7 parts of acrylamide as an ethylenically unsaturated amide monomer, 0.5 parts of tert-dodecyl mercaptan as a molecular weight modifier, 0.20 parts of sodium lauryl sulfate as an emulsifier, and 44 parts of deionized water to obtain a mixture B.

The temperature of the contents of the pressure-resistant vessel A after the seed particles had been obtained was raised to 75°C, and the mixture B was added into the pressure-resistant vessel A over 5 hours. Simultaneously thereto, addition of 0.5 parts of potassium persulfate as a polymerization initiator to the pressure-resistant vessel A was initiated so as to initiate polymerization.

In other words, the overall monomer composition was 33.7 parts of styrene, 47.3 parts of 1,3-butadiene, 14.2 parts of acrylic acid, 4.7 parts of acrylamide, and 0.1 parts of methacrylic acid.

Addition of the entire amount of a mixture containing this monomer composition was completed at 5 hours from the start of polymerization, and then 0.5 parts of potassium persulfate was further added. Thereafter, the temperature was raised to 90°C, and a reaction was performed for 4 hours.

Cooling was performed to quench the reaction at the point at which the polymerization conversion rate reached 97%. The mixture containing this polymerized product was adjusted to pH 8 through addition of 5% sodium hydroxide aqueous solution. Unreacted monomer was subsequently removed through thermal-vacuum distillation. Thereafter, cooling was performed to yield a binder composition containing the desired particulate binder.

The obtained binder composition was used to measure the average particle diameter Da of the particulate binder measured by dynamic light scattering (solid content concentration 0.5 mass%), the average particle diameter Db of the particulate binder measured by dynamic light scattering (solid content concentration 0.005 mass%), the average particle diameter Dc of the particulate binder measured by laser diffraction/scattering, the amount of THF-insoluble content, the degree of swelling in electrolyte solution, a repeated tensing test, and the tensile strength in a repeated tensing test. The results are shown in Table 1.

<Production of slurry composition for negative electrode>

A planetary mixer equipped with a disper blade was charged with 87.3 parts of artificial graphite as a carbon-based negative electrode active material, 9.7 parts of $SiO_x$ as a silicon-based negative electrode active material, and 2.0 parts (in terms of solid content) of carboxymethyl cellulose sodium salt aqueous solution as a thickener. These materials were adjusted to a solid content concentration of 61.5% with deionized water and were mixed at room temperature for 40 minutes. After mixing, these materials were adjusted stepwise to solid content concentrations of 56% and 51% with deionized water, and then 1.0 parts (in terms of solid content) of the binder composition obtained as described above was further added to yield a mixture. The obtained mixture was subjected to defoaming under reduced pressure to obtain a slurry composition for a negative electrode having good fluidity.

<Production of negative electrode>

The slurry composition for a negative electrode described above was applied onto copper foil (current collector) of 16 $\mu$m in thickness by a comma coater such as to have a coating weight of 10 mg/cm$^2$. The copper foil with this slurry composition for a negative electrode applied thereon was conveyed inside an oven having a temperature of 75°C for 2 minutes and inside an oven having a temperature of 120°C for 2 minutes at a speed of 0.5 m/min so as to dry the slurry composition for a negative electrode on the copper foil and obtain a negative electrode web. This negative electrode web was rolled by roll pressing to obtain a negative electrode having a negative electrode mixed material layer thickness of 80 $\mu$m.

<Production of positive electrode>

A slurry composition for a positive electrode was obtained by loading 96 parts of lithium nickel manganese cobalt oxide as a positive electrode active material, 2 parts in terms of solid content of PVDF (polyvinylidene fluoride) as a binder for a positive electrode mixed material layer, 2 parts of acetylene black as a conductive material, and 20 parts of N-methylpyrrolidone as a solvent into a planetary mixer and mixing these materials.

The obtained slurry composition for a positive electrode was applied onto aluminum foil (current collector) of 16 $\mu$m in thickness by a comma coater such as to have a coating weight after drying of 24.5 mg/cm$^2$. The aluminum foil having the slurry composition for a positive electrode applied thereon was conveyed inside an oven having a temperature of 60°C for 2 minutes and an oven having a temperature of 120°C for 2 minutes at a speed of 0.5 m/min so as to dry the slurry composition for a positive electrode on the aluminum foil and obtain a positive electrode web. This positive electrode web was rolled by roll pressing to obtain a positive electrode having a positive electrode mixed material layer thickness of 70 $\mu$m.

<Preparation of separator>

A separator made of a single layer of polypropylene (width 65 mm, length 500 mm, thickness 25 $\mu$m; produced by dry method; porosity 55%) was prepared. A square of 5 cm $\times$ 5 cm was cut out from this separator to be used in the following secondary battery.

<Production of secondary battery>

An aluminum packing case was prepared as a battery case. The positive electrode was cut out as a square of 4 cm $\times$ 4 cm and was arranged with a surface at the current collector-side in contact with the aluminum packing case. Next, the square separator was arranged on the surface of the positive electrode mixed material layer of the positive electrode. The negative electrode was then cut out as a square of 4.2 cm $\times$ 4.2 cm, and this square negative electrode was arranged on the separator with a surface at the negative electrode mixed material layer-side facing toward the separator. Thereafter, a LiPF$_6$ solution of 1.0 M in concentration (solvent: mixed solvent of ethylene carbonate (EC)/ethyl methyl carbonate (EMC) = 3/7 (mass ratio); additives: 2 mass% of vinylene carbonate and 2 mass% of fluoroethylene carbonate) was loaded as an electrolyte solution. The aluminum packing case was then closed by heat sealing at a temperature of 150°C so as to seal an opening of the aluminum packing and produce a laminate cell-type secondary battery.

Electrode swelling and cycle characteristics were evaluated for the obtained secondary battery. The results are shown in Table 1.

(Example 2)

Various operations, measurements, and evaluations were performed in the same way as in Example 1 with the exception that in production of the binder composition, the used amount of the molecular weight modifier in the mixture B was changed from 0.5 parts to 0.25 parts. The results are shown in Table 1.

(Example 3)

Various operations, measurements, and evaluations were performed in the same way as in Example 1 with the exception that in production of the binder composition, acrylic acid in the mixture B was changed from 14.2 parts to 11.8 parts, 1,3-butadiene in the mixture B was changed from 44 parts to 46.7 parts, styrene in the mixture B was changed from 31.6 parts to 32.2 parts, and acrylamide in the mixture B was changed from 4.7 parts to 3.8 parts (i.e., the overall monomer composition was changed to 34.3 parts of styrene, 50.0 parts of 1,3-butadiene, 11.8 parts of acrylic acid, 3.8 parts of acrylamide, and 0.1 parts of methacrylic acid). The results are shown in Table 1.

(Example 4)

Various operations, measurements, and evaluations were performed in the same way as in Example 3 with the exception that in production of the binder composition, the used amount of the molecular weight modifier in the mixture B was changed from 0.5 parts to 0.25 parts. The results are shown in Table 1.

(Example 5)

Various operations, measurements, and evaluations were performed in the same way as in Example 2 with the exception that in production of the binder composition, 1,3-butadiene in the mixture B was changed from 44 parts to 44.9 parts, styrene in the mixture B was changed from 31.6 parts to 32.4 parts, and acrylamide in the mixture B was changed from 4.7 parts to 3.0 parts (i.e., the overall monomer composition was changed to 34.5 parts of styrene, 48.2 parts of 1,3-butadiene, 14.2 parts of acrylic acid, 3.0 parts of acrylamide, and 0.1 parts of methacrylic acid). The results are shown in Table 1.

(Example 6)

Various operations, measurements, and evaluations were performed in the same way as in Example 2 with the exception that in production of the binder composition, acrylic acid in the mixture B was changed from 14.2 parts to 10.0 parts, 1,3-butadiene in the mixture B was changed from 44 parts to 44.9 parts, styrene in the mixture B was changed from 31.6 parts to 32.4 parts, acrylamide in the mixture B was changed from 4.7 parts to 3.0 parts, and 4.2 parts of methacrylic acid was further added to the mixture B (i.e., the overall monomer composition was changed to 34.5 parts of styrene, 48.2 parts of 1,3-butadiene, 10.0 parts of acrylic acid, 3.0 parts of acrylamide, and 4.3 parts of methacrylic acid). The results are shown in Table 1.

(Comparative Example 1)

Various operations, measurements, and evaluations were performed in the same way as in Example 1 with the exception that the binder composition was taken to be a binder composition obtained by the following production method in which a particulate binder formed through two-stage polymerization was used. The results are shown in Table 1.

<Production of binder composition>

First, in a first stage of polymerization, a 5 MPa pressure-resistant vessel equipped with a stirrer was charged with 24 parts of styrene as an aromatic vinyl monomer, 69 parts of 1,3-butadiene as an aliphatic conjugated diene monomer, 100 parts of deionized water, 0.7 parts of dodecylbenzenesulfonic acid as an emulsifier, 0.1 parts of $\alpha$-methylstyrene dimer as a chain transfer agent, and 0.3 parts of potassium persulfate as a polymerization initiator for core portion formation, and these materials were thoroughly stirred. Thereafter, these materials were heated to 60°C to initiate polymerization. Polymerization was continued until the polymerization conversion rate reached 96%.

Next, in a second stage of polymerization, 7 parts of methacrylic acid as an ethylenically unsaturated carboxylic acid monomer and 37 parts of deionized water were continuously added into the same pressure-resistant vessel under stirring for shell portion formation, and polymerization was continued. This water dispersion was heated to 70°C, and, at the point at which the polymerization conversion rate reached 97%, was cooled to quench the reaction, thereby forming a polymer as a shell portion at the outer surface of a core portion and obtaining a mixture containing a particulate binder that had a core-shell structure. Thereafter, unreacted monomer was removed by thermal-vacuum distillation. The mixture containing the particulate binder was adjusted to pH 7 through addition of 5% sodium hydroxide aqueous solution to yield a binder composition (water dispersion).

The obtained binder composition was used to measure the average particle diameter Da of the particulate binder measured by dynamic light scattering (solid content concentration 0.5 mass%), the average particle diameter Db of the particulate binder measured by dynamic light scattering (solid content concentration 0.005 mass%), the average particle diameter Dc of the particulate binder measured by laser diffraction/scattering, the amount of THF-insoluble content, the degree of swelling in electrolyte solution, a repeated tensing test, and the tensile strength in a repeated tensing test. The results are shown in Table 1.

(Comparative Example 2)

Various operations, measurements, and evaluations were performed in the same way as in Example 1 with the exception that in production of the binder composition, acrylic acid in the mixture B was changed from 14.2 parts to 9.5 parts, 1,3-butadiene in the mixture B was changed from 44 parts to 49.1 parts, styrene in the mixture B was changed from 31.6 parts to 32.6 parts, and acrylamide in the mixture B was changed from 4.7 parts to 3.3 parts (i.e. the overall monomer composition was changed to 34.7 parts of styrene, 52.4 parts of 1,3-butadiene, 9.5 parts of acrylic acid, 3.3 parts of acrylamide, and 0.1 parts of methacrylic acid). The results are shown in Table 1.

(Comparative Example 3)

Various operations, measurements, and evaluations were performed in the same way as in Example 1 with the exception that the binder composition was taken to be a binder composition obtained by the following production method. The results are shown in Table 1.

<Production of binder composition>

A 5 MPa pressure-resistant vessel equipped with a stirrer was charged with 65.0 parts of styrene as an aromatic vinyl monomer, 30.0 parts of 1,3-butadiene as an aliphatic conjugated diene monomer, 1.5 parts of acrylic acid and 3.5 parts of itaconic acid as ethylenically unsaturated carboxylic acid monomers, 4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. Cooling was performed to quench the reaction at the point at which the polymerization conversion rate reached 96%. The mixture containing this polymerized product was adjusted to pH 8 through addition of 5% sodium hydroxide aqueous solution. Thereafter, unreacted monomer was removed by thermal-vacuum distillation, and then cooling was performed to 30°C or lower to yield a binder composition (water dispersion) containing a particulate binder.

(Comparative Example 4)

Various operations, measurements, and evaluations were performed in the same way as in Example 1 with the exception that in production of the binder composition, acrylic acid in the mixture B was changed from 14.2 parts to 18.9 parts, 1,3-butadiene in the mixture B was changed from 44 parts to 40.3 parts, styrene in the mixture B was changed from 31.6 parts to 29 parts, and acrylamide in the mixture B was changed from 4.7 parts to 6.3 parts (i.e., the overall monomer composition was changed to 31.1 parts of styrene, 43.6 parts of 1,3-butadiene, 18.9 parts of acrylic acid, 6.3 parts of acrylamide, and 0.1 parts of methacrylic acid). The results are shown in Table 1.

(Comparative Example 5)

Various operations, measurements, and evaluations were performed in the same way as in Example 1 with the exception that the binder composition was taken to be a binder composition obtained by the following production method. The results are shown in Table 1.

<Production of binder composition>

A 5 MPa pressure-resistant vessel equipped with a stirrer was charged with 62.5 parts of styrene as an aromatic vinyl monomer, 34 parts of 1,3-butadiene as an aliphatic conjugated diene monomer, 3.5 parts of itaconic acid as an ethylenically unsaturated carboxylic acid monomer, 4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. Cooling was performed to quench the reaction at the point at which the polymerization conversion rate reached 96%. The mixture containing this polymerized product was adjusted to pH 8 through addition of 5% sodium hydroxide aqueous solution. Thereafter, unreacted monomer was removed by thermal-vacuum distillation, and then cooling was performed to 30°C or lower to yield a binder composition (water dispersion) containing a particulate binder.

In Table 1:

"AA" indicates acrylic acid;
"IA" indicates itaconic acid;
"MAA" indicates methacrylic acid;
"BD" indicates 1,3-butadiene;
"ST" indicates styrene; and
"AAm" indicates acrylamide.

[Table 1]

| Binder composition for non-aqueous secondary battery negative electrode | | | Examples | | | | | | Comparative examples | | | | |
|---|---|---|---|---|---|---|---|---|---|---|---|---|---|
| | | | 1 | 2 | 3 | 4 | 5 | 6 | 1 | 2 | 3 | 4 | 5 |
| Particulate binder | Chemical composition of polymer [parts by mass] | Ethylenically unsaturated carboxylic acid monomer — AA | 14.2 | 14.2 | 11.8 | 11.8 | 14.2 | 10.0 | - | 9.5 | 1.5 | 18.9 | - |
| | | Ethylenically unsaturated carboxylic acid monomer — IA | - | - | - | - | - | - | - | - | 3.5 | - | 3.5 |
| | | Ethylenically unsaturated carboxylic acid monomer — MAA | 0.1 | 0.1 | 0.1 | 0.1 | 0.1 | 4.3 | 7.0 | 0.1 | - | 0.1 | - |
| | | Ethylenically unsaturated carboxylic acid monomer — Total | 14.3 | 14.3 | 11.9 | 11.9 | 14.3 | 14.3 | 7.0 | 9.6 | 5.0 | 19.0 | 3.5 |
| | | Aliphatic conjugated diene monomer — BD | 47.3 | 47.3 | 50.0 | 50.0 | 48.2 | 48.2 | 69.0 | 52.4 | 30.0 | 43.6 | 34.0 |
| | | Aromatic vinyl monomer — ST | 33.7 | 33.7 | 34.3 | 34.3 | 34.5 | 34.5 | 24.0 | 34.7 | 65.0 | 31.1 | 62.5 |
| | | Ethylenically unsaturated amide monomer — AAm | 4.7 | 4.7 | 3.8 | 3.8 | 3.0 | 3.0 | - | 3.3 | - | 6.3 | - |
| | Used amount of molecular weight modifier [parts by mass] | | 0.50 | 0.25 | 0.50 | 0.25 | 0.25 | 0.25 | 0.10 | 0.50 | 0.50 | 0.50 | 0.50 |
| | Average particle diameter Da [nm] (0.5 mass%, dynamic light scattering) | | 230 | 250 | 230 | 240 | 230 | 220 | 270 | 210 | 170 | 250 | 165 |
| | Average particle diameter Db [nm] (0.005 mass%, dynamic light scattering) | | 190 | 210 | 190 | 190 | 190 | 180 | 190 | 175 | 160 | 220 | 160 |
| | Average particle diameter Dc [nm] (laser diffraction/scattering) | | 140 | 140 | 150 | 150 | 150 | 150 | 130 | 160 | 150 | 150 | 150 |
| | Da - Db [nm] | | 40.0 | 40.0 | 40.0 | 50.0 | 40.0 | 40.0 | 80.0 | 35.0 | 10.0 | 30.0 | 5.0 |
| | Da/Dc | | 1.64 | 1.79 | 1.53 | 1.60 | 1.53 | 1.47 | 2.08 | 1.31 | 1.13 | 1.67 | 1.10 |
| | Amount of THF-insoluble content [mass%] | | 98 | 98 | 98 | 98 | 98 | 98 | 90 | 98 | 90 | 99 | 90 |
| | Degree of swelling in electrolyte solution [mass%] | | 125 | 130 | 130 | 130 | 130 | 130 | 130 | 130 | 130 | 120 | 130 |
| Repeated tensing test | | | No breaking | No breaking | No breaking | No breaking | No breaking | No breaking | No breaking | No breaking | No breaking | Breaking at 5 repetitions | No breaking |

(continued)

| | | | Examples | | | | | | Comparative examples | | | | |
|---|---|---|---|---|---|---|---|---|---|---|---|---|---|
| | | | 1 | 2 | 3 | 4 | 5 | 6 | 1 | 2 | 3 | 4 | 5 |
| | | Tensile strength after repeated tensing test [MPa] | 4.0 | 4.0 | 2.5 | 2.8 | 3.5 | 2.0 | 0.8 | 1.2 | 0.3 | - | 0.3 |
| | | | | | | | | | | | | | |
| Evaluation | | Electrode swelling | A | A | B | B | A | B | D | C | D | C | D |
| | | Cycle characteristics | B | A | B | A | B | B | D | C | D | C | D |

As can clearly be seen from Table 1, it is possible to favorably suppress swelling of a negative electrode in accompaniment to repeated charging and discharging and to cause a secondary battery to display excellent cycle characteristics when using the binder composition for a non-aqueous secondary battery negative electrode of each of Examples 1 to 6.

INDUSTRIAL APPLICABILITY

According to the present disclosure, it is possible to provide a binder composition for a non-aqueous secondary battery negative electrode that can favorably suppress swelling of a negative electrode in accompaniment to repeated charging and discharging and that can cause a secondary battery to display excellent cycle characteristics.

Moreover, according to the present disclosure, it is possible to provide a slurry composition for a non-aqueous secondary battery negative electrode that can favorably suppress swelling of a negative electrode in accompaniment to repeated charging and discharging and that can cause a secondary battery to display excellent cycle characteristics.

Furthermore, according to the present disclosure, it is possible to provide a negative electrode for a non-aqueous secondary battery that has a low tendency to swell even upon repeated charging and discharging and that can cause a secondary battery to display excellent cycle characteristics.

Also, according to the present disclosure, it is possible to provide a non-aqueous secondary battery that has a low tendency to experience swelling of a negative electrode due to charging and discharging and that has excellent cycle characteristics.

REFERENCE SIGNS LIST

10    particulate binder
11    main body portion
12    string-like portion

**Claims**

1. A binder composition for a non-aqueous secondary battery negative electrode comprising a particulate binder and water, wherein

   the particulate binder includes a polymer including an ethylenically unsaturated carboxylic acid monomer unit, an aromatic vinyl monomer unit, and an aliphatic conjugated diene monomer unit,
   proportional content of the ethylenically unsaturated carboxylic acid monomer unit when all repeating units in the polymer are taken to be 100 mass% is not less than 5.0 mass% and not more than 15.0 mass%, and
   the particulate binder has an average particle diameter Da measured by dynamic light scattering with respect to the binder composition for a non-aqueous secondary battery negative electrode when adjusted to a solid content concentration of 0.5 mass%, an average particle diameter Db measured by dynamic light scattering with respect to the binder composition for a non-aqueous secondary battery negative electrode when adjusted to a solid content concentration of 0.005 mass%, and an average particle diameter Dc measured by laser diffraction/-scattering with respect to the binder composition for a non-aqueous secondary battery negative electrode that satisfy relationships in formulae (1) and (2), shown below:

$$\mathrm{Da} - \mathrm{Db} \leq 60.0 \ \mathrm{nm} \ \cdots \ (1)$$

$$1.40 \leq \mathrm{Da/Dc} \leq 2.00 \ \cdots \ (2).$$

2. The binder composition for a non-aqueous secondary battery negative electrode according to claim 1, wherein an amount of tetrahydrofuran-insoluble content in the particulate binder is more than 90 mass% and less than 100 mass%.

3. The binder composition for a non-aqueous secondary battery negative electrode according to claim 1 or 2, wherein proportional content of the aliphatic conjugated diene monomer unit when all repeating units in the polymer are taken to be 100 mass% is not less than 30.0 mass% and not more than 60.0 mass%.

4. The binder composition for a non-aqueous secondary battery negative electrode according to any one of claims 1 to 3, wherein the polymer further includes an ethylenically unsaturated amide monomer unit.

5. The binder composition for a non-aqueous secondary battery negative electrode according to claim 4, wherein proportional content of the ethylenically unsaturated amide monomer unit when all repeating units in the polymer are taken to be 100 mass% is 3.5 mass% or more.

6. A slurry composition for a non-aqueous secondary battery negative electrode comprising: a negative electrode active material; and the binder composition for a non-aqueous secondary battery negative electrode according to any one of claims 1 to 5.

7. The slurry composition for a non-aqueous secondary battery negative electrode according to claim 6, wherein the negative electrode active material includes a silicon-based negative electrode active material.

8. A negative electrode for a non-aqueous secondary battery comprising: a current collector; and a negative electrode mixed material layer located on the current collector, wherein
the negative electrode mixed material layer is a layer formed from the slurry composition for a non-aqueous secondary battery negative electrode according to claim 6 or 7.

9. A non-aqueous secondary battery comprising a positive electrode, a negative electrode, a separator, and an electrolyte solution, wherein
the negative electrode is the negative electrode for a non-aqueous secondary battery according to claim 8.

FIG. 1

## INTERNATIONAL SEARCH REPORT

| International application No. |
|---|
| **PCT/JP2024/011128** |

**A. CLASSIFICATION OF SUBJECT MATTER**

*H01M 4/62*(2006.01)i; *H01M 4/134*(2010.01)i; *H01M 4/139*(2010.01)i; *H01M 4/38*(2006.01)i; *H01M 10/052*(2010.01)i; *H01M 10/0566*(2010.01)i

FI:  H01M4/62 Z; H01M4/134; H01M4/139; H01M4/38; H01M10/052; H01M10/0566

According to International Patent Classification (IPC) or to both national classification and IPC

**B. FIELDS SEARCHED**

Minimum documentation searched (classification system followed by classification symbols)

H01M4/00-4/62; H01M10/05-10/0587; H01M10/36-10/39

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/039067 A1 (JSR CORPORATION) 17 March 2016 (2016-03-17) entire text, all drawings | 1-9 |
| A | WO 2023/008582 A1 (NIPPON ZEON CO.) 02 February 2023 (2023-02-02) entire text, all drawings | 1-9 |
| A | WO 2023/008100 A1 (NIPPON ZEON CO.) 02 February 2023 (2023-02-02) entire text, all drawings | 1-9 |
| A | JP 2016-48633 A (NIPPON ZEON CO.) 07 April 2016 (2016-04-07) entire text, all drawings | 1-9 |
| A | JP 2017-117597 A (NIPPON ZEON CO.) 29 June 2017 (2017-06-29) entire text, all drawings | 1-9 |
| A | WO 2020/196111 A1 (NIPPON ZEON CO.) 01 October 2020 (2020-10-01) entire text, all drawings | 1-9 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be |
| "E" | earlier application or patent but published on or after the international filing date | considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **30 May 2024** | **11 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

International application No.

**PCT/JP2024/011128**

## C. DOCUMENTS CONSIDERED TO BE RELEVANT

| Category* | Citation of document, with indication, where appropriate, of the relevant passages | Relevant to claim No. |
|---|---|---|
| A | WO 2018/173717 A1 (NIPPON ZEON CO.) 27 September 2018 (2018-09-27) entire text, all drawings | 1-9 |
| A | WO 2017/110654 A1 (NIPPON ZEON CO.) 29 June 2017 (2017-06-29) entire text, all drawings | 1-9 |
| A | WO 2015/098507 A1 (NIPPON ZEON CO.) 02 July 2015 (2015-07-02) entire text, all drawings | 1-9 |
| A | WO 2022/113760 A1 (NIPPON ZEON CO.) 02 June 2022 (2022-06-02) entire text, all drawings | 1-9 |
| A | WO 2018/221197 A1 (JSR CORPORATION) 06 December 2018 (2018-12-06) entire text, all drawings | 1-9 |

Form PCT/ISA/210 (second sheet) (July 2022)

EP 4 693 509 A1

INTERNATIONAL SEARCH REPORT
Information on patent family members

International application No.

**PCT/JP2024/011128**

| Patent document cited in search report | | | Publication date (day/month/year) | Patent family member(s) | | | Publication date (day/month/year) |
|---|---|---|---|---|---|---|---|
| WO | 2016/039067 | A1 | 17 March 2016 | US | 2017/0279123 | A1 | |
| | | | | entire text, all drawings | | | |
| | | | | EP | 3193397 | A1 | |
| | | | | KR | 10-2017-0039227 | A | |
| | | | | CN | 106663812 | A | |
| WO | 2023/008582 | A1 | 02 February 2023 | (Family: none) | | | |
| WO | 2023/008100 | A1 | 02 February 2023 | CN | 117321805 | A | |
| JP | 2016-48633 | A | 07 April 2016 | (Family: none) | | | |
| JP | 2017-117597 | A | 29 June 2017 | (Family: none) | | | |
| WO | 2020/196111 | A1 | 01 October 2020 | US | 2022/0293941 | A1 | |
| | | | | entire text, all drawings | | | |
| | | | | EP | 3951923 | A1 | |
| | | | | CN | 113169301 | A | |
| | | | | KR | 10-2021-0144692 | A | |
| WO | 2018/173717 | A1 | 27 September 2018 | US | 2020/0152985 | A1 | |
| | | | | entire text, all drawings | | | |
| | | | | EP | 3609004 | A1 | |
| | | | | CN | 110402510 | A | |
| | | | | KR | 10-2019-0125986 | A | |
| WO | 2017/110654 | A1 | 29 June 2017 | US | 2019/0273261 | A1 | |
| | | | | entire text, all drawings | | | |
| | | | | EP | 3396748 | A1 | |
| | | | | CN | 108370038 | A | |
| | | | | KR | 10-2018-0094896 | A | |
| | | | | CN | 116936806 | A | |
| WO | 2015/098507 | A1 | 02 July 2015 | CN | 105765775 | A | |
| | | | | KR | 10-2016-0102399 | A | |
| WO | 2022/113760 | A1 | 02 June 2022 | US | 2023/0420682 | A1 | |
| | | | | entire text, all drawings | | | |
| | | | | EP | 4253436 | A1 | |
| | | | | CN | 116568716 | A | |
| | | | | KR | 10-2023-0113738 | A | |
| WO | 2018/221197 | A1 | 06 December 2018 | CN | 110710034 | A | |

Form PCT/ISA/210 (patent family annex) (July 2022)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016058184 A
- JP 2012204303 A